# FASCICULE DE BREVET EUROPEEN

(11) **EP 3 010 768 B1**
(45) Date de publication et mention de la délivrance du brevet: **01.03.2017**
(21) Numéro de dépôt: 14730175.8
(22) Date de dépôt: 16.06.2014
(51) Int. Cl.: B60R 25/021

(54) **DISPOSITIF ANTIVOL POUR COLONNE DE DIRECTION**
DIEBSTAHLSCHUTZ FÜR EINE LENKSÄULE
ANTITHEFT DEVICE FOR STEERING COLUMN

(30) Priorité: 21.06.2013 FR 1355949
(43) Date de publication de la demande: 27.04.2016
(73) Titulaire: U-Shin France, 94000 Créteil (FR)
(72) Inventeur: POGGI, Patrice, F-58000 Nevers (FR); PERRIN, Christophe, F-58000 Nevers (FR)
(74) Mandataire: Gaillarde, Frédéric F. Ch.
(86) Numéro de dépôt international: PCT/EP2014/062603
(87) Numéro de publication internationale: WO 2014/202549

(56) Documents cités:
- FR-A1- 2 853 874
- GB-A- 2 465 680
- JP-A- 2010 247 781

## Description

La présente demande concerne un dispositif antivol pour colonne de direction, notamment d'un véhicule automobile. Elle concerne plus particulièrement un antivol de véhicule faisant intervenir un organe de verrouillage ou pêne de verrouillage de la colonne de direction d'un véhicule lors du retrait de la clé de contact. A cet effet, le pêne est monté mobile dans le dispositif antivol entre une position de verrouillage de la colonne de direction et une position de libération.

De tels antivols comprennent généralement un verrou avec un stator et un rotor actionné par la clé de contact et commandant notamment au cours de sa rotation le mouvement du pêne. Plus précisément, le mouvement de rotation du rotor est transmis au pêne au moyen d'un arbre à cames.

Généralement, le rotor et l'arbre à cames ont un axe de rotation commun et la came, permettant la transformation du mouvement de rotation en un mouvement de translation du pêne, peut s'étendre axialement par rapport à l'axe de rotation de l'arbre à cames, si l'axe de translation du pêne est parallèle à l'axe de rotation de l'arbre à cames, ou encore s'étendre radialement, si l'axe de translation du pêne est perpendiculaire à l'axe de rotation de l'arbre à cames.

De tels dispositifs antivol sont particulièrement adaptés lorsque les axes de rotation du rotor et de l'arbre à cames sont confondus et lorsque le pêne a un axe de translation parallèle ou perpendiculaire l'arbre à cames. Néanmoins, les constructeurs automobiles peuvent être amenés à développer où requérir, selon leurs besoins et contraintes de productions, des dispositifs antivol ayant une forme générale en « Y », c'est-à-dire où le rotor et l'arbre à cames ont des axes de rotation se croisant et où l'axe de translation du pêne passe par ce croisement, chacun de ces éléments formant une branche du « Y ». Il est donc important d'adapter les moyens de transmission et transformation des mouvements de rotation du rotor, et par extension de l'arbre à cames, en mouvement de translation du pêne à cette conformation en « Y » du dispositif antivol.

Un des buts de la présente invention est donc de remédier au moins partiellement aux inconvénients de l'art antérieur et de proposer un dispositif antivol amélioré.

La présente invention concerne donc un dispositif antivol pour colonne de direction notamment de véhicule automobile, ledit dispositif antivol ayant une forme générale en « Y »,
une première branche comportant un verrou avec un rotor monté rotatif autour d'un axe de rotation et comprenant une première extrémité orientée vers l'extérieur du « Y » et destinée à recevoir une clé de contact,
une seconde branche comprenant un arbre à cames monté rotatif autour d'un axe de rotation et présentant une première extrémité orientée vers l'extérieur du « Y » et reliée à un contacteur de démarrage du véhicule automobile,
une troisième branche comprenant un pêne monté mobile en translation entre une position de verrouillage de la colonne de direction et une position de libération de ladite colonne de direction,
le rotor comportant à une seconde extrémité, orientée vers l'intérieur du « Y », une denture en prise avec une denture complémentaire portée, sur une portion de sa périphérie, par une seconde extrémité de l'arbre à cames, orientée vers l'intérieur du « Y », ladite seconde extrémité de l'arbre à cames étant prolongée par une came radiale, ladite came radiale coopérant avec un organe de liaison porté par le pêne.

Cette conformation de la came radiale et son positionnement permettent un passage du pêne de sa position de verrouillage à sa position de libération de la colonne de direction simplifié et facilité. Le pêne peut ainsi translater aisément en direction de l'intérieur du « Y » sans rencontrer d'obstacle en coopérant avec la came radiale. Le fait que les secondes extrémités de l'arbre à cames et du rotor comportent des dentures permet également une transmission directe et précise des mouvements de rotations entre ces deux éléments.

Selon un aspect de l'invention, la came radiale comporte un profil général de forme spiralé.

Selon un autre aspect de l'invention, la came radiale comporte:
- une portion distale sur laquelle peut reposer l'organe de liaison,
- une portion proximale sur laquelle peut reposer l'organe de liaison et étant plus proche de l'axe de rotation que la portion distale, et une portion intermédiaire spiralée autour de l'axe de rotation de l'arbre à cames et reliant les portions distale et proximale.

Selon un autre aspect de l'invention, la portion distale est de profil semi-circulaire ayant comme centre l'axe de rotation de l'arbre à cames.

Selon un autre aspect de l'invention, la portion proximale est de profil semi-circulaire ayant comme centre l'axe de rotation de l'arbre à cames.

Selon un autre aspect de l'invention, l'organe de liaison entre le pêne et la came radiale est un doigt venant de matière avec ledit pêne.

Selon un autre aspect de l'invention, l'organe de liaison entre le pêne et la came radiale est un pion fixé audit pêne.

Selon un autre aspect de l'invention, l'organe de liaison est en contact avec la paroi concave de la came radiale.

Selon un autre aspect de l'invention, le dispositif antivol comporte un moyen élastique de retour du pêne en position de verrouillage de la colonne de direction.

Selon un autre aspect de l'invention, le dispositif antivol comporte un moyen de retenue du pêne en position de libération de la colonne de direction.

La présente invention concerne également un véhicule automobile, comportant un dispositif antivol comme décrit précédemment.

D'autres caractéristiques et avantages de l'invention ressortiront de la description suivante, donnée à titre d'exemple, sans caractère limitatif, en regard des dessins annexés sur lesquels :
- les figures 1A, 2A, 3A et 4A montrent des représentations schématiques en perspective d'un dispositif antivol selon différentes positions lors du déverrouillage d'une colonne de direction,
- les figures 1B, 2B, 3B, et 4B montrent des représentations schématiques en perspective d'une extrémité d'un arbre à cames selon différentes positions lors du déverrouillage d'une colonne de direction.

Sur ces figures, les éléments identiques portent les mêmes numéros de référence.

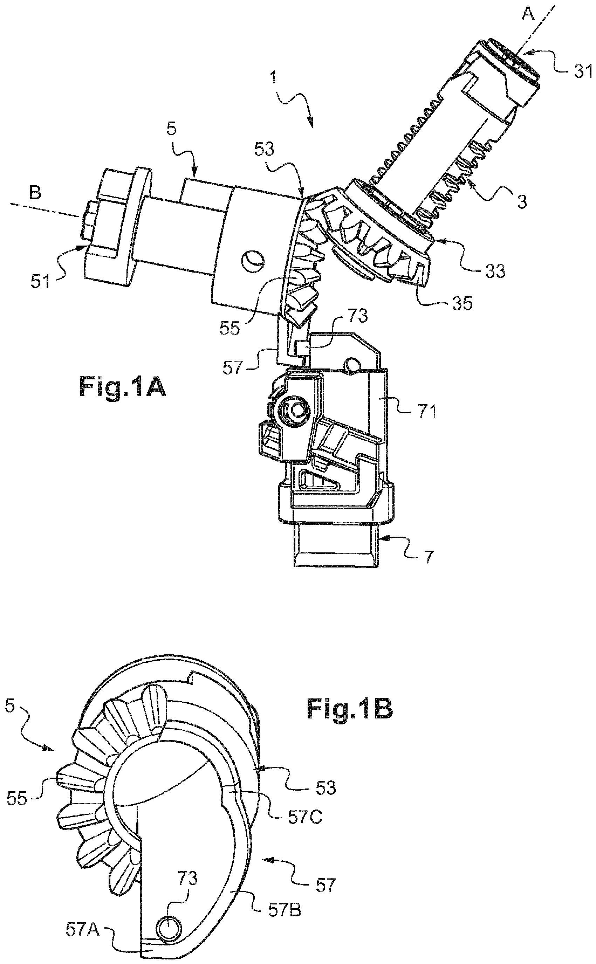

La figure 1A montre une représentation schématique en perspective d'un dispositif antivol 1 ayant une forme générale en « Y ».

Le dispositif antivol 1 comporte notamment un verrou comprenant un rotor 3 monté dans rotatif autour d'un axe de rotation A au sein d'un stator (non représenté). Une première branche du « Y » du dispositif antivol 1 comporte le rotor 3 et ce dernier présente une première extrémité 31, orientée vers l'extérieur du «Y», destinée à recevoir une clé de contact. Le rotor 3 comporte à une seconde extrémité 33, orientée vers l'intérieur du « Y » du dispositif antivol 1, une denture 35.

Une seconde branche du « Y » du dispositif antivol 1 comporte un arbre à cames 5 monté rotatif autour d'un axe de rotation B. L'arbre à cames 5 comporte une première extrémité 51, orientée vers l'extérieur du « Y », reliée à un contacteur de démarrage (non représenté) du véhicule automobile. L'arbre à cames 5 comporte à une seconde extrémité 53, orientée vers l'intérieur du « Y » du dispositif antivol 1, une denture complémentaire 5 5 de la denture 35 du rotor 3 de sorte qu'une rotation du rotor 3 autour de son axe A, par exemple d'une position d'arrêt vers une position de démarrage du véhicule, entraîne une rotation de l'arbre à cames 5 autour de son axe B. La seconde extrémité 53 de l'arbre à cames 5 comporte également une came radiale 57, c'est à dire s'étendant radialement par rapport à l'axe de rotation B.

La troisième branche du « Y » du dispositif antivol comporte quant à elle un pêne 7 monté mobile en translation entre une position de verrouillage d'une colonne de direction (non représentée) et une position de libération de cette dernière. Le pêne 7 est monté mobile en translation au sein d'un étui 71 et en position de verrouillage, il s'étend vers l'extérieur du « Y » du dispositif antivol 1 de sorte à rentrer au sein d'une encoche dans la colonne de direction afin de bloquer sa rotation. En position de libération, le pêne 7 translate en direction de l'intérieur du « Y » du dispositif de direction antivol 1, ressort de l'encoche et libère la colonne de direction.

Le pêne 7 comporte également un organe de liaison 73 qui coopère avec la came radiale 57 de l'arbre à cames 5. La coopération entre le pêne 7 et la came radiale 57 est tel que la rotation de l'arbre à came 5 du faite de la rotation du rotor 3 d'une position d'arrêt vers une position de démarrage du véhicule, entraîne la translation du pêne 7 de sa position de verrouillage vers sa position de libération.

L'organe de liaison 73 entre le pêne 7 et la came radiale 57 peut être par exemple un pion 73 comme illustré sur les différentes figures ou encore un doigt venant de matière avec ledit pêne 7.

Comme le montre plus en détail la figure 1B montrant une représentation schématique de la seconde extrémité 53 de l'arbre à came 5, la denture complémentaire 55 n'est présente que sur une portion de la périphérie de la seconde extrémité 53, la portion restante étant occupée par la came radiale 57.

La came radiale 57 a un profil spiralé autour de l'axe de rotation B dudit arbre à cames 5. Elle comporte en outre une portion distale 57A sur laquelle peut reposer l'organe de liaison 73, par exemple en ayant un profil semi-circulaire ayant comme centre l'axe de rotation B ou tangent. La came radiale 57 comporte également une portion proximale 57C sur laquelle peut également reposer l'organe de liaison 73 et étant plus proche de l'axe de rotation B que la portion distale 57A. La portion proximale 57C peut également avoir un profil semi-circulaire ayant comme centre l'axe de rotation B ou tangent. Reliant les portions distales 57A et proximale 57C, la came 57 comporte une troisième portion intermédiaire 57B spiralée autour de l'axe de rotation B.

Par profil spiralé, on entend que la came radiale 57 et plus particulièrement la portion intermédiaire 57B, tourne autour de l'axe de rotation B tout en s'éloignant de ce dernier.

L'organe de liaison 73 est en contact avec la paroi concave de la came radiale 57.

Cette conformation de la came radiale 57 et son positionnement permettent un passage du pêne 7 de sa position de verrouillage à sa position de libération de la colonne de direction simplifié et facilité. Le pêne 7 peut ainsi translater aisément en direction de l'intérieur du « Y » sans rencontrer d'obstacle en coopérant avec la came radiale 57. De plus, le fait que les secondes extrémités 53 et 33 de l'arbre à cames 5 et du rotor 3 comportent des dentures, permet également une transmission directe et précise des mouvements de rotations entre ces deux éléments.

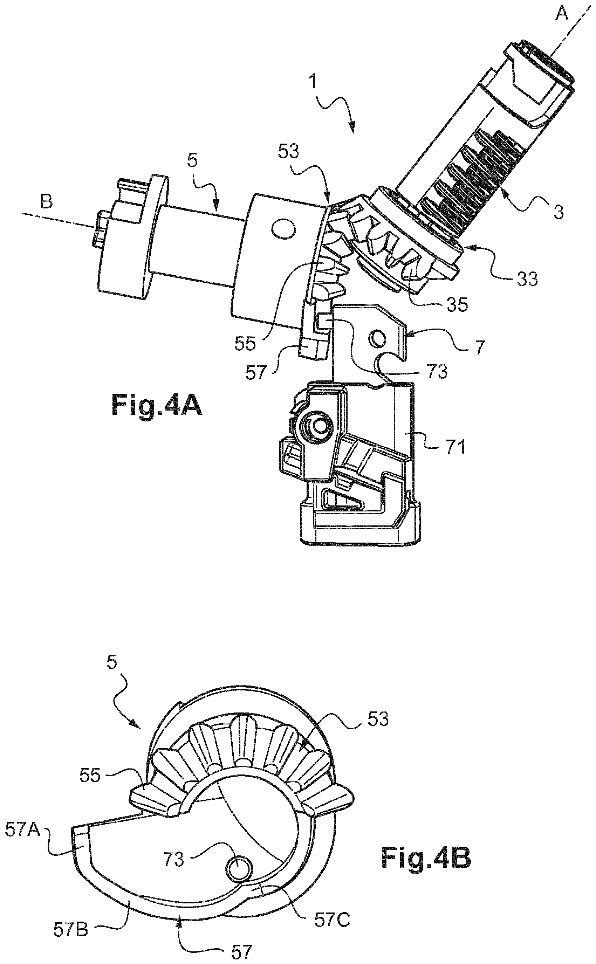

Les figures 1A, 2A, 3A et 4A montrent la cinématique de passage de la position de verrouillage de la colonne de direction du pêne 7 (illustré en figure 1A) vers la position de libération de la colonne de direction du pêne 7 (illustré en figure 4A). Les figures 1B, 2B, 3B et 4B montrent, pour des positions identiques, l'emplacement de l'organe de liaison 73 sur la came radiale 57 de l'arbre à cames 5.

La figure 1A montre ainsi la position du rotor 3, de l'arbre à cames 5 et du pêne 7 lorsque le rotor 3 est en position d'arrêt. Dans cette position, l'organe de liaison 73 est situé sur la portion distale 57A (voir figure 1B) de la came radiale 57 et le pêne 7 s'étend vers l'extérieur du « Y » du dispositif antivol 1 de sorte à bloquer la rotation de la colonne de direction.

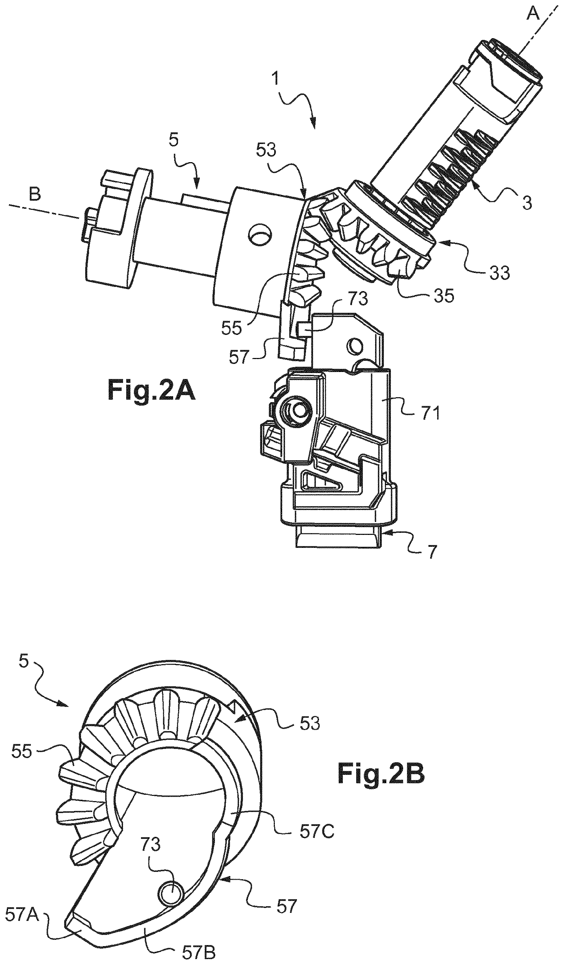

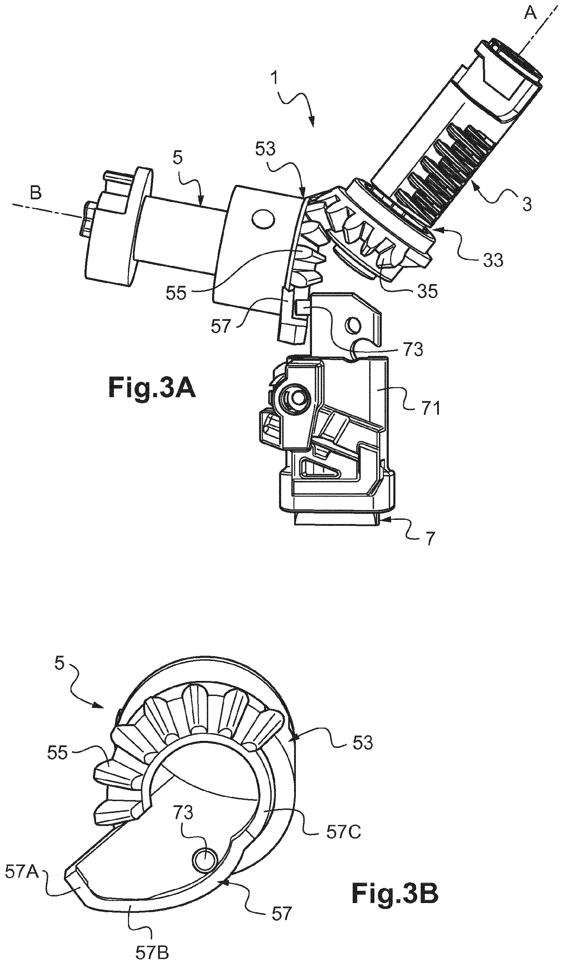

Comme illustré par les figures 2A et 3B, après une rotation de l'ordre de 20° du rotor 3 vers une position de démarrage du véhicule automobile, l'arbre à came 5 est entrainé en rotation grâce aux dentures 35 et 55. La rotation de l'arbre à came 5 autour de l'axe de rotation B entraine le déplacement de l'organe de liaison 73 le long de la came radiale 57 et le fait passer de la portion distale 57A sur la portion intermédiaire 57B. De part de déplacement le long de la came radiale 57, l'organe de liaison 73 se rapproche de l'axe de rotation B et par conséquent entraîne un déplacement en translation du pêne 7 vers l'intérieur du « Y » du dispositif antivol 1. Dans cette position, le pêne 7 est toujours en partie au sein de l'encoche de la colonne de direction et bloque toujours sa rotation.

Comme illustré aux figures 3A et 3B, après une rotation de l'ordre de 40° du rotor 3, toujours vers la position de démarrage du véhicule automobile, l'organe de liaison 73 continue de se déplacer le long de la came radiale 57 et arrive à la jonction entre la portion intermédiaire 57B et la portion proximale 57C. L'organe de liaison se rapproche donc d'autant de l'axe de liaison B et le pêne 7 continue donc de translater en direction de l'intérieur du « Y » du dispositif antivol 1. Dans cette position, le pêne 7 est toujours en partie au sein de l'encoche de la colonne de direction et bloque toujours sa rotation.

Les figures 4A et 4B montrent quand à elles la position des pièces lorsque le rotor 3 a effectué une rotation de l'ordre de 60° en direction de sa position de démarrage. Dans cette position, l'organe de liaison 73 est au niveau de la portion proximale 57C et le pêne 7 est translaté au maximum vers de l'intérieur du « Y » du dispositif antivol 1 car l'organe de liaison 73 ne peut plus s'approcher d'avantage de l'axe de rotation B. Le pêne 7 est ici sorti de l'encoche de la colonne de direction et libère toujours sa rotation. Du fait que la portion proximale 57C est semi-circulaire autour de l'axe de rotation B de l'arbre à cames 5, si ce dernier continue de tourner, l'organe de liaison 73 restera à une distance constante dudit axe de rotation B et donc le pêne 7 restera immobile.

Afin de faciliter son retour en position de verrouillage, lorsque le rotor 3 est remis en position d'arrêt, le pêne 7 peut avantageusement être relié à un moyen élastique (non représenté). Par exemple, ce moyen élastique peut être un ressort mis en compression par le passage du pêne 7 de sa position de verrouillage à sa position de libération. De plus il est également avantageux que le dispositif antivol 1 comporte un moyen de retenue (non représenté) du pêne 7 en position de libération. Ce moyen de retenue permet un blocage du pêne 7 lorsque celui-ci est en position de libération de la colonne de direction et empêche ce dernier de translater par exemple lorsque le rotor passe dans une position intermédiaire dite accessoire entre sa position de démarrage et d'arrêt du véhicule. Le moyen de retenue peut ensuite libérer le pêne 7 par exemple lorsque le rotor 3 est en position d'arrêt et/ou que l'utilisateur effectue une action spécifique comme retirer la clé de contact.

Il est également possible d'imaginer un profil spiralé de came radiale 57 hétérogène, et plus particulièrement de la portion intermédiaire 57B, où la pente formée par la came radiale 57 est plus faible proche de la portion distale 57A, afin de facilité le décollement du pêne 7, cela au détriment de la vitesse de translation dudit pêne 7, et où la pente augment plus l'on se rapproche de la portion proximale 57C.

Ainsi on voit bien que le dispositif antivol 1 selon l'invention, du fait de la position de la came radiale 57 et de son profil spiralé permet un blocage et déverrouillage facilité de la colonne de direction, notamment d'un véhicule automobile, grâce à une translation aisée du pêne 7 au sein du « Y » que forme le dispositif antivol 1.

## Revendications

1. Dispositif antivol (1) pour colonne de direction notamment de véhicule automobile, ledit dispositif antivol (1) ayant une forme générale en « Y »,
une première branche comportant un verrou avec un rotor (3) monté rotatif autour d'un axe de rotation (A) et comprenant une première extrémité (31) orientée vers l'extérieur du « Y » et destinée à recevoir une clé de contact,
une seconde branche comprenant un arbre à cames (5) monté rotatif autour d'un axe de rotation (B) et présentant une première extrémité (51) orientée vers l'extérieur du « Y » et reliée à un contacteur de démarrage du véhicule automobile,
une troisième branche comprenant un pêne (7) monté mobile en translation entre une position de verrouillage de la colonne de direction et une position de libération de ladite colonne de direction,
**caractérisé en ce que** le rotor (3) comporte à une seconde extrémité (33), orientée vers l'intérieur du « Y », une denture (35) en prise avec une denture complémentaire (55) portée, sur une portion de sa périphérie, par une seconde extrémité (53) de l'arbre à cames (5), orientée vers l'intérieur du « Y », et **en ce que** ladite seconde extrémité (53) de l'arbre à cames (5) est prolongée par une came radiale (57), ladite came radiale (57) coopérant avec un organe de liaison (73) porté par le pêne (7).

2. Dispositif antivol (1) selon la revendication précédente, **caractérisé en ce que** la came radiale (57) comporte un profil général de forme spiralé.

3. Dispositif antivol (1) selon l'une des revendications précédentes, **caractérisé en ce que** la came radiale (57) comporte:
- une portion distale (57A) sur laquelle peut reposer l'organe de liaison (73),
- une portion proximale (57C) sur laquelle peut reposer l'organe de liaison (73) et étant plus proche de l'axe de rotation (B) que la portion distale (57A), et
- une portion intermédiaire (57B) spiralée autour de l'axe de rotation (B) de l'arbre à cames (5) et reliant les portions distale (57A) et proximale (57C).

4. Dispositif antivol (1) selon la revendication précédente, **caractérisé en ce que** la portion distale (57A) est de profil semi-circulaire ayant comme centre l'axe de rotation (B) de l'arbre à cames (5).

5. Dispositif antivol (1) selon l'une des revendications 3 ou 4, **caractérisé en ce que** la portion proximale (57C) est de profil semi-circulaire ayant comme centre l'axe de rotation (B) de l'arbre à cames (5).

6. Dispositif antivol (1) selon l'une des revendications précédentes, **caractérisé en ce que** l'organe de liaison (73) entre le pêne (7) et la came radiale (57) est un doigt venant de matière avec ledit pêne (7).

7. Dispositif antivol (1) selon l'une des revendications 1 à 5, **caractérisé en ce que** l'organe de liaison (73) entre le pêne (7) et la came radiale (57) est un pion fixé audit pêne (7).

8. Dispositif antivol (1) selon l'une des revendications précédentes, **caractérisé en ce que** l'organe de liaison (73) est en contact avec la paroi concave de la came (57).

9. Dispositif antivol (1) selon l'une des revendications précédentes, **caractérisé en ce qu'**il comporte un moyen élastique de retour du pêne (7) en position de verrouillage de la colonne de direction.

10. Dispositif antivol (1) selon l'une des revendications précédentes, **caractérisé en ce qu'**il comporte un moyen de retenue du pêne (7) en position de libération de la colonne de direction.

11. Véhicule automobile, **caractérisé en ce qu'**il comporte un dispositif antivol (1) selon l'une quelconque des revendications précédentes.

## Patentansprüche

1. Diebstahlsicherungsvorrichtung (1) für eine Lenksäule insbesondere eines Kraftfahrzeugs, wobei die besagte Diebstahlsicherungsvorrichtung (1) eine allgemeine "Y"-Form aufweist,
wobei ein erster Schenkel eine Sperre mit einem Rotor (3) umfasst, der um eine Drehachse (A) drehend montiert ist, und ein erstes Ende (31) umfassend, das in Richtung Außenseite des "Y" orientiert ist und dazu bestimmt ist, einen Zündschlüssel aufzunehmen,
wobei ein zweiter Schenkel eine Nockenwelle (5) umfasst, die um eine Drehachse (B) drehend montiert ist, und ein erstes Ende (51) aufweist, das in Richtung Außenseite des "Y" orientiert ist und mit einem Startschalter des Kraftfahrzeugs verbunden ist,
wobei ein dritter Schenkel einen Riegel (7) umfasst, der zwischen einer Verriegelungsposition der Lenksäule und einer Freigabeposition der besagten Lenksäule verschiebbar montiert ist,
**dadurch gekennzeichnet, dass** der Rotor (3) an einem zweiten Ende (33), das in Richtung Innenseite des "Y" orientiert ist, eine Verzahnung (35) in Eingriff mit einer ergänzenden Verzahnung (55) umfasst, die auf einem Abschnitt seiner Peripherie von einem zweiten Ende (53) der Nockenwelle (5) getragen wird, das in Richtung Innenseite des "Y" orientiert ist, und dadurch, dass das besagte zweite Ende (53) der Nockenwelle (5) durch einen radialen Nocken (57) erweitert wird, wobei der besagte radiale Nocken (57) mit einem Verbindungsorgan (73) zusammenwirkt, das vom Riegel (7) getragen wird.

2. Diebstahlsicherungsvorrichtung (1) nach dem vorhergehenden Anspruch, **dadurch gekennzeichnet, dass** der radiale Nocken (57) ein allgemeines gewendeltes Profil umfasst.

3. Diebstahlsicherungsvorrichtung (1) nach einem der vorhergehenden Ansprüche, **dadurch gekennzeichnet, dass** der radiale Nocken (57) Folgendes umfasst:
- einen distalen Abschnitt (57A), an dem das Verbindungsorgan (73) anliegen kann,
- einen proximalen Abschnitt (57C), an dem das Verbindungsorgan (73) anliegen kann, und der näher an der Drehachse (B) liegt, als der distale Abschnitt (57A), und
- einen Zwischenabschnitt (57B), der sich um die Drehachse (B) der Nockenwelle (5) wendelt und den distalen (57A) und den proximalen (57C) Abschnitt miteinander verbindet.

4. Diebstahlsicherungsvorrichtung (1) nach dem vorhergehenden Anspruch, **dadurch gekennzeichnet, dass** der distale Abschnitt (57A) ein halbkreisförmiges Profil aufweist, dessen Mitte die Drehachse (B) der Nockenwelle (5) ist.

5. Diebstahlsicherungsvorrichtung (1) nach einem der Ansprüche 3 oder 4, **dadurch gekennzeichnet, dass** der proximale Abschnitt (57C) ein halbkreisförmiges Profil aufweist, dessen Zentrum die Drehachse (B) der Nockenwelle (5) ist.

6. Diebstahlsicherungsvorrichtung (1) nach einem der vorhergehenden Ansprüche, **dadurch gekennzeichnet, dass** das Verbindungsorgan (73) zwischen dem Riegel (7) und dem radialen Nocken (57) ein Finger ist, der in einem Stück mit dem besagten Riegel (7) gefertigt ist.

7. Diebstahlsicherungsvorrichtung (1) nach einem der Ansprüche 1 bis 5, **dadurch gekennzeichnet, dass** das Verbindungsorgan (73) zwischen dem Riegel (7) und dem radialen Nocken (57) ein Stift ist, der am besagten Riegel (7) befestigt ist.

8. Diebstahlsicherungsvorrichtung (1) nach einem der vorhergehenden Ansprüche, **dadurch gekennzeichnet, dass** das Verbindungsorgan (73) in Kontakt mit der konkaven Wand des Nockens (57) ist.

9. Diebstahlsicherungsvorrichtung (1) nach einem der vorhergehenden Ansprüche, **dadurch gekennzeichnet, dass** sie ein elastisches Rückholmittel des Riegels (7) in die Verriegelungsposition der Lenksäule umfasst.

10. Diebstahlsicherungsvorrichtung (1) nach einem der vorhergehenden Ansprüche, **dadurch gekennzeichnet, dass** sie ein Rückhaltemittel des Riegels (7) in der Freigabeposition der Lenksäule umfasst.

11. Kraftfahrzeug, **dadurch gekennzeichnet, dass** es eine Diebstahlsicherungsvorrichtung (1) nach einem der vorhergehenden Ansprüche umfasst.

## Claims

1. An anti-theft device (1) for a steering column, in particular for a motor vehicle, said anti-theft device (1) having a « Y » general shape,
a first branch including a lock with a rotor (3) rotatably mounted about an axis of rotation (A) and comprising a first end (31) oriented outwardly from the « Y » and intended to receive a contact key,
a second branch comprising a camshaft (5) rotatably mounted about an axis of rotation (B) and having a first end (51) oriented outwardly from the « Y » and connected to a start contactor of the motor vehicle,
a third branch comprising a bolt (7) movably mounted in translation between a locking position of the steering column and a release position of said steering column,
**characterized in that** the rotor (3) includes at a second end (33), oriented inwardly of the « Y », a toothing (35) engaged with a complementary toothing (55) carried on a portion of its periphery, by a second end (53) of the camshaft (5), oriented inwardly of the « Y », and that said second end (53) of the camshaft (5) is extended by a radial cam (57), said radial cam (57) cooperating with a connecting member (73) carried by the bolt (7).

2. The anti-theft device (1) according to the preceding claim, **characterized in that** the radial cam (57) includes a general spiral-shaped profile.

3. The anti-theft device (1) according to any of the preceding claim, **characterized in that** the radial cam (57) includes:
- a distal portion (57A) on which the connecting member (73) can rest,
- a proximal portion (57C) on which the connecting member (73) can rest and being closer to the axis of rotation (B) than the distal portion (57A), and
- a spiral intermediate portion (57B) about the axis of rotation (B) of the camshaft (5) and connecting the distal (57A) and the proximal (57C) portions.

4. The anti-theft device (1) according to the preceding claim, **characterized in that** the distal portion (57A) is of semicircular profile having as center the axis of rotation (B) of the camshaft (5).

5. The anti-theft device (1) according to any of the preceding claims 3 or 4, **characterized in that** the proximal portion (57C) is of semicircular profile having as center the axis of rotation (B) of the camshaft (5).

6. The anti-theft device (1) according to any of the preceding claims, **characterized in that** the connecting member (73) between the bolt (7) and the radial cam (57) is a finger made in one piece with said bolt (7).

7. The anti-theft device (1) according to any of the claims 1 to 5, **characterized in that** the connecting member (73) between the bolt (7) and the radial cam (57) is a pin fastened to said bolt (7).

8. The anti-theft device (1) according to any of the preceding claims, **characterized in that** the connecting member (73) is in contact with the concave wall of the cam (57).

9. The anti-theft device (1) according to any of the preceding claims, **characterized in that** it includes an elastic return means of the bolt (7) to the locking position of the steering column.

10. The anti-theft device (1) according to any of the preceding claims, **characterized in that** it includes means for retaining the bolt (7) in the release position of the steering column.

11. A motor vehicle, **characterized in that** it includes an anti-theft device (1) according to any one of the preceding claims.
